# EUROPEAN PATENT APPLICATION

(11) **EP 3 098 746 A1**
(43) Date of publication of application: **30.11.2016**
(21) Application number: 15305804.5
(22) Date of filing: 28.05.2015
(51) Int. Cl.: G06F 21/60

(54) **METHOD TO MANAGE THE ACCESS RIGHTS ASSOCIATED TO A DATAFLOW SYSTEM AND COMPUTER-READABLE MEDIUM**

(71) Applicant: ALCATEL LUCENT, 92100 Boulogne-Billancourt (FR)
(72) Inventor: DOBBELAERE, Philippe, ANTWERP (BE)
(74) Representative: Berthier, Karine

(57) **Abstract**

Method, system and computer readable medium to manage the access rights associated to a dataflow transmitted within a system. The method comprises a step of integrating a first identifier within the dataflow, the first identifier comprising an indication of the access right associated to the dataflow, a step of determining the access right, to the dataflow, based on the first identifier integrated within the dataflow.

## Description

### FIELD OF INVENTION

The present subject matter relates to a method to manage the access right of a plurality of computer modules involved in the processing of the same data flow. These dataflows are also known as streams, flows or data streams.

### BACKGROUND

The present subject matter can be used in a system, for example a web based dataflow processing environment, which processes data owned by multiple parties (e.g. an M2M application deployment platform). This system processes simultaneously data associated to different cross-domain applications. Furthermore the present subject matter can allow this system to implement fine-grained access control to dataflow entering the system and derived dataflows produced in the system.

### SUMMARY

This summary is provided to introduce concepts related to manage the access right of a plurality of computer modules involved in the processing of the same data flow.

In one implementation, a method to manage the access rights associated to a dataflow transmitted within a system is described.The method comprises a step of integrating a first identifier within the dataflow, the first identifier comprising an indication of the access right associated to the dataflow, a step of determining the access right, to the dataflow, based on the first identifier integrated within the dataflow.

In another implementation, a system to transmit and process a dataflow is described. The system comprises a first module configured to integrate first identifier within the dataflow, the first identifier comprising an indication of the access right associated to the dataflow and a second module configured to determine the access right to the dataflow based on the first identifier integrated within the dataflow.

In another implementation a computer-readable medium is described. The computer-readable medium has embedded thereon a computer program configured to manage the access rights associated to a dataflow transmitted within a system. The computer program comprises a step of integrating a first identifier within the dataflow, the first identifier comprising an indication of the access right associated to the dataflow and a step of determining the access right, to the dataflow based on the first identifier integrated within the dataflow

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents a first embodiment of the method object of the present subject matter
Figure 2 presents a second embodiment of the method object of the present subject matter
Figure 3 presents a third embodiment of the method object of the present subject matter
Figure 4 presents a fourth embodiment of the method object of the present subject matter
Figure 5 presents a first embodiment of the system object of the present subject matter
Figure 6 presents a second embodiment of the system object of the present subject matter
Figure 7 presents a third embodiment of the system object of the present subject matter

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

In an embodiment, a method or mechanism called ACL for Access Control List is proposed. This method can be used in different file systems and be implemented within multiple operating systems. This method used rigid user - group - world taxonomy of the entities that can access a resource, and used per-resource configuration (possibly per-directory configuration) of access rights. Using this method only a single entity can manage the access rights. This method has no notion of inheritance of access rights based on access rights of resources that were used to create new resources, apart from the exception where new files can inherit rights from their directory. This method is not adapted to nowadays file systems, indeed these file systems have grown to such size that a concept of single parent directory - and consequently single inheritance of access rights - has become inadequate, hence the interest in "tagging", "indexing", "tag browsing",... around web or file system based resources lately. So this method is unsuitable for use in a web based distributed environment handling data of multiple organizations.

By access right we mean some rules governing who/what and when a resource can be created, deleted, searched for, metadata read, metadata written, data read, data written, etc.

In another embodiment a method based on symmetric or asymmetric cryptography is used to manage access right. This method does allow operation in a federated context since encryption keys can easily be made to be de-facto globally unique. However within this method the access right management is only limited to the exhaustive listing of what resources each party can access. So this method lacks scalability for example to be used in a web based data handling framework connecting multiple organizations together.

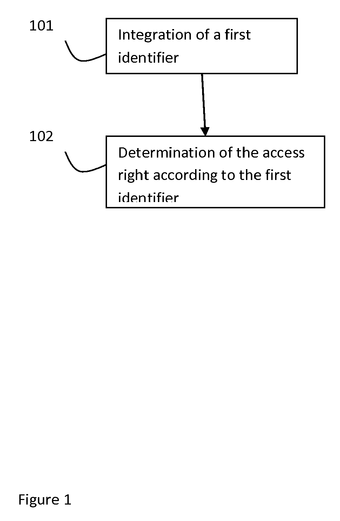

The figure 1 presents the method object of the present subject matter. This method handles the management of the access rights associated to a dataflow transmitted within a system. The method comprises
a step 101 of integrating a first identifier within the dataflow,
the first identifier comprising an indication of the access right associated to the dataflow,
a step 102 of determining the access right based on the first identifier integrated within the dataflow.
The first identifier is also known as flow token.

The dataflow can be emitted by different types of elements for example an apparatus or a computer module etc. the dataflow can be processed by different types of elements for example an apparatus or a computer module etc.. The element of emission is involve of the realization of the step 101 of integrating the first identifier and the element of processing is involve of the realization of the step 102 of determining the access right. The elements of emission and processing of the dataflow belong to the same system but not necessary to the same physical entity. These elements can for example be two different computers or two different devices, or be two computer modules belonging to two different computers or devices or to the same computer or device.

In other words the method presented above comprises:
A step of creating first identifiers, also know as tokens, which are associated to different dataflows. These tokens are created by the owners of the dataflows and are based out of a combination of a "mode factor" and a "flowid factor". This flow token goes in the flow token set of the flow. In other words the flows can be the result of the derivation of multiple other flows - if each original flow has a token, there needs to be a mechanism to "bundle" the tokens of the original flows in the derived flow in order to obtain an updated token set. For an original flow that does not depend on other flows, the token set just contains the element of a single first identifier. By factor we mean a number that follows some rule that will be presented in the following part of this divulgation. Within these tokens the "mode factor" describes possible operations on the dataflows that modulate access control: copy unaltered, aggregate, time delay, anonyms, ... (not an exhaustive list) and the "flowid factor" uniquely identifies the data source.
A step of transmitting (also known as propagating) these tokens within the different components involved in the processing to the dataflows associated to these tokes. During this transmission these tokens the "flowid factor" is propagated unmodified (if multiple flows join to create a new flow, the complete token (combination of flowid and mode in order to keep association between the flowid and mode) of the flow is the union of original complete token of the originating flows producing this new flow). The "mode factor" can be altered appropriately by the component if the component actually modifies the flow as described by the factor alteration.
A step of determining the access right to a dataflow, this step is based on the token associated to the dataflow. whenever an interested party wants to access the flow (by trying to read it, or by trying to deploy additional logic in the framework that uses it as input), it needs to present an access control token that is created out of a "mode factor", "flowid factor" and "obfuscating factor". The "mode factor" and "flowid factor" have the same semantics as described for flow tokens. The "obfuscating factor" makes it harder for flow consumers to reverse-engineer the access control scheme. The first identifier associated to the dataflow doesn't contain an "obfuscating factor", because there is no problem giving the visibility of tokens to the producer of the dataflow. You do not need to protect anything away from the owner. Now, the tokens will be handed out to potential consumers. These cannot be trusted. They could for example try to share tokens or try to reverse engineer the protection mechanism. The obfuscation factor makes this harder. It is just a factor that makes the result look random to consumers, but that can easily be removed by the platform to arrive at the original mode and "flowid factors". Additionally, obfuscating factors can be made unique per consumer so that the access tokens are effectively watermarked and illegal sharing can be traced back to the owners. The method will allow or deny access to resources by checking the access control tokens of the interested parties against the flow token sets of these resources. The consumer has access to a flow if he has access to all flow tokens associated to the flow. A consumer has access to a flow token if after removal of the obfuscation factors, one of his tokens in the access control list satisfies the flow token. If tokens are suitably constructed from prime numbers, satisfaction can be verified by divisibility (e.g. access token 2.3.5.a.obfuscator has access to flow token 3.a since 3.a divides 2.3.5.a). Due to the fact that the mode tokens are products of primes, simple division can be used as an efficient way to test subset relations.
In other words:
1) A consumer has access to a flow if he has access to all flow tokens added to the stream.
2) A consumer has access to a flow token if after removal of the obfuscation factors, one of his tokens in the access control list satisfies the flow token
3) the step of determining access right can be based in an exemplary embodiment on prime number arithmetic

The method, presented above, allows the modification of the access rights to the dataflows when these dataflows are modified for example when they are aggregated, time delayed, etc. In other words, this method can also modulate access right according to effects from flow operators such as aggregation (which removes privacy sensitive information and could hence be exposed to a wider audience) or time delay (which removes "freshness" - cfr stock ticker values - and hence would make the flow less valuable which is another reason to put it in a separate access class).

In an embodiment the first identifier comprised;
a first set of different numbers, indicating the access rights, and
a first number indicating the dataflow
Within this an element of the system is associated with a second identifier comprised:
a second set of different numbers, indicating the access rights, and
a second number indicating the dataflow, and
And within this embodiment the step 102 of determining the access right of this element is configured to determine if the second identifier comprised, within the second set of numbers all the numbers of the first set of numbers.
If the second identifier comprises, within the second set of numbers, all the number of the first set of numbers, the access right is granted to the element,
If the second identifier does not comprise, within the second set of numbers, all the number of the first set of numbers, the access right is denied to the element.

In another embodiment the first identifier is the multiplication of a first set of different prime numbers, indicating the access rights, and
a first prime number non divisible by any of the numbers of the first set, indicating the dataflow
Within this embodiment an element of the system is associated with a second identifier constituted of the multiplication of:
a second set of different prime numbers, indicating the access rights, and
a second number non divisible by any of the previous prime number, indicating the dataflow, and
and eventually another integer number not dividing the second number nor any of the numbers of the second set, used to obfuscate the second identifier.
And within this embodiment the step 102 of determining the access right of this element is configured to determine if the second identifier is divisible by the first identifier.
Only if the second identifier is divisible by the first identifier the access right is granted to the element.

In an embodiment the integer number used to obfuscate the second identifier is a prime number.

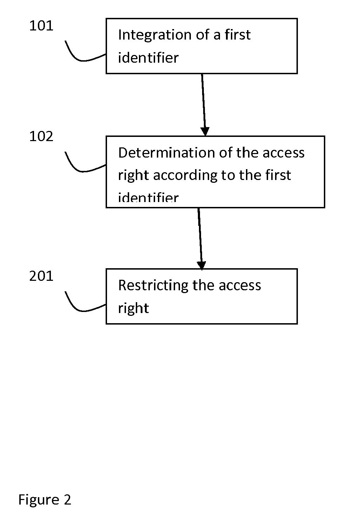

In an embodiment, presented figure 2, the method also comprises;
a step 201 of restricting the access right by concatenating, to the first identifier, at least another number not belonging the first set of numbers, in order to obtain an updated first identifier.

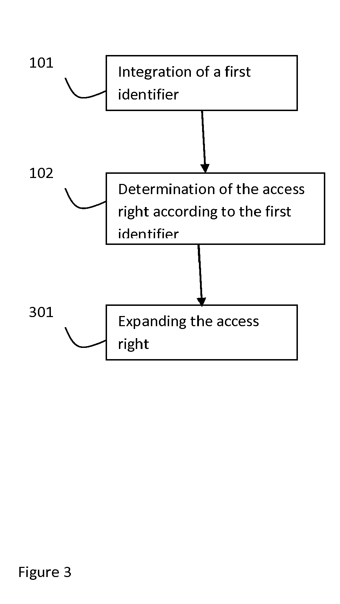

In an embodiment, presented figure 3, the method also comprises;
a step 301 of expanding the access right by removing, to the first identifier, at least one of the numbers of the first set of numbers, in order to obtain an updated first identifier.

In an embodiment the method also comprises a step 201 of restricting the access right by multiplying the first identifier by at least another prime number not belonging the first set of prime numbers, in order to obtain an updated first identifier.

In an embodiment the method also comprises a step 301 of expanding the access right by dividing the first identifier by at least one of the prime numbers of the first set of prime numbers, in order to obtain an updated first identifier.

In other words, each dataflow is associated to a first identifier and this identifier or token encodes all the access control information a consumer needs in order to rightfully access the dataflow.

These identifiers are constructed by the multiplication of two numbers, so called factors (e.g. [(2.3.5).a]):

The first factor (e.g. [2.3.5]) is a product of primes out of a reserved set of primes corresponding to a particular privacy impacting processing operation (the primes need not be small as in the example - any prime will do and larger primes will make reverse-engineering harder). This first factor is also called "mode factor". Non limiting examples of prime number can be:
- The prime number 2 can be associated to raw dataflow as originally provided by the source.
- The prime number 3 can be associated to raw dataflow that went through an anonimising operation, such as an aggregate operation, a sampling function,... (this could be used to expose data for public use after anonimisation, but restrict access to the original dataflow to a more limited set of consumers)
- The prime number 5 can be associated to time-delayed raw flow (an application could e.g.be stock ticker values, where a delayed flow would be cheaper than a real-time flow and hence we need a way to disambiguate the two flows for access control)

The second factor (e.g. [a]) is a number that is not dividable by any allowed value out of the first factor set. This second factor is also called "flowid factor". This second factor carries the id of the flow almost transparently in our access control mechanism makes it really simple to interact with external identity providers (a simple mapping table between external identity and internal "flowid factor" could already be sufficient).

Generally the primes coding for the "mode factor" are never exposed to data producers or consumers - the API towards the producer allows defining requested modes, and internally this is converted to the prime factors. The "flowid factor" is exposed to the dataflow producer.

This first identifier or token is put within the flow of the dataflow. As a result, it becomes trivially simple to detect the privacy operations realizable with a particular dataflows, by checking if it has the respective mode factor as divisor. Also, components acting on the flows can selectively remove tokens if they perform the associated access control related operation. If they do not modify the flow in any way impacting its access control, they should just copy all the incoming flow token sets to the outgoing message by taking a union of the sets, removing duplicates or reducing if applicable.

A reduction could e.g. be an incoming flow with flow token "(2.3).a" indicating that it was derived from "flowid factor" "a" and needs access rights to the raw flow "a" with a second incoming flow with flow token "3.a" indicating that it was derived from "flowid factor" "a" and only needs access rights to anonimised flow "a". The resulting flow token in the outgoing set would simply be the strongest of the two, being "(2.3).a".

The first identifier or token also comprises an obfuscating factor that is multiplied with the two other factors. This obfuscating factor is selected out of a set of integers that should neither divide the mode factors nor "flowid factors" used to generate the flow token. Using this obfuscating factor the data exchanged can for example be commercial or legal arrangement between two parties. The obfuscating factor can be used as a watermark identifying a particular consumer.

By multiplying the flow tokens with a random selection out of one of these integers (so called obfuscating factor), it becomes very hard for not allowed parties (for example consumer and providers, or consumers masquerading as providers) to reverse-engineer the access right they have been provided, while making it trivially simple for our access control logic to factor out the obfuscator and obtain the original access right.

A party has the right to access to a flow if he has the right to access to all flow tokens added to the flow. A party has the right to access to a flow token if after removal of the obfuscation factors, one of his tokens in the access control list is divisible by the flow token (e.g. access token 2.3.5.a.obfuscator has access to flow token 3.a since 3.a divides 2.3.5.a). Due to the fact that the mode tokens are products of primes, simple division can be used as an efficient way to test subset relations.

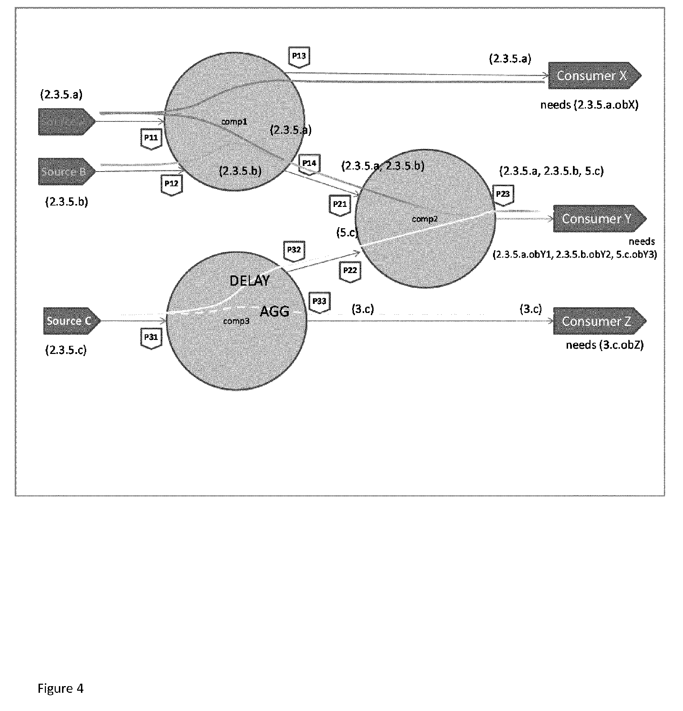

The figure 4 illustrates how the method of the present subject matter could be used. In this figure the source A publishes a flow with access tokens (2.3.5.a). This flow does not go through any privacy modifying operation, and as a result consumers X and Y will need token (2.3.5.a.random_obfuscator) to access the dataflow.
The source B publishes a flow with access tokens (2.3.5.b). Following the same line of logic, consumer Y would additionally need token (2.3.5.b.random_obfuscator) to access the dataflow.
The source C publishes a flow with access tokens (2.3.5.c). Component comp3 has some access control modifying operations: the derived flow issued from port P32 is time-delayed, and published with modified token (5.c); the derived flow issued from port P33 is aggregated, and published with modified token (3.c).
As a result, consumer Y would additionally need token (5.c.random_obfuscator) to access the flow at P23, and consumer Z will need token (3.c.random_obfuscator) to access the flow at P33.

The method object of the present subject matter only needs a few conventions inside the system using the method. The mode factors and flowid factors are chosen out of a set of prime numbers. The obfuscating factors can be any value that is not divisible by any of the mode factors or flowid factors (a prime will trivially satisfy this requirement, but this in itself is not required). The data producers would get that "flowid factor" and use it to protect a single dataflow or group of dataflows.

In an embodiment of the present subject matter the data consumers would get a list of obfuscated access tokens giving them appropriate access to the dataflows that are used in the generation of the output flow they are interested in. This interest could be getting a copy of the flow, or deploying additional logic in the framework using this flow as input. This means that the access control check needs to be implemented both at the external interface of the system (for example the channel Application Programming Interface API listening for external connections and the HyperText Transfer Protocol HTTP daemon - we could carry the access control tokens over the HTTP authentication infrastructure) and at the interface used to start additional applications on the framework (for example the component deployment backend). On a logical level, by following the dataflow graph from consumer in the upflow direction to producer, all the contributing producers would have to provide their "flowid factor" used to protect the flow and the mode factor selecting what kind of derived flow they would like to make available. All of this logic is implemented efficiently, with zero configuration overhead, in real time by coupling it to the flow analysis system. In this embodiment the unprotected flows would have no flow tokens, and could be digested by consumers without an access control token for that dataflow. Component providers would have to indicate whether access tokens on incoming messages should be transferred to outgoing messages, subject to token filtering if the component modifies the flow in ways that would impact the mode factors used on the output messages (e.g. P32 only needs token 5c since we delay the flow in the component, P33 only needs token 3c since we provide an aggregated flow at that port).

One embodiment of the present subject matter is a system. This system comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

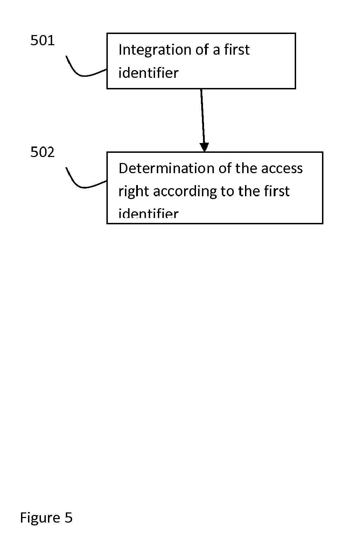

The system presented figure 5 comprises a first module 501 configured to integrate a first identifier within the dataflow, the first identifier comprising a indication of the access right associated to the dataflow, and a second module 502 configured to determine the access right to the dataflow based on the first identifier integrated within the dataflow.

In an embodiment, the system comprises two apparatus. One of the apparatus comprises the first module 501 and the other apparatus comprises the second module 502.

In an embodiment of the system the first identifier comprised;
a first set of different numbers, indicating the access rights, and
a first number indicating the dataflow
In the embodiment of this system an element, also known as apparatus is associated with a second identifier comprising:
a second set of different numbers, indicating the access rights, and
a second number indicating the dataflow, and
Wherein this system, the second module 502 is also configured to determine if the second identifier comprises, within the second set of numbers, all the numbers of the first set of numbers.

In an embodiment of the system the first identifier is the multiplication of
a first set of different prime numbers, indicating the access rights, and
a first prime number non divisible by any of the numbers of the first set, indicating the dataflow
In this embodiment of the system an element, also known as apparatus, is associated with a second identifier constituted of the multiplication of:
a second set of different prime numbers, indicating the access rights, and
a second number non divisible by any of the numbers of the second set, indicating the dataflow, and
and eventually another integer number not dividing the second number nor any of the numbers of the second set, used to obfuscate the second identifier,
In this embodiment of the system the second module 502 is also configured to determine if the second identifier is divisible by the first identifier.
Only if the second identifier is divisible by the first identifier the access right is granted to the element.

In an embodiment the integer number used to obfuscate the second identifier is a prime number.

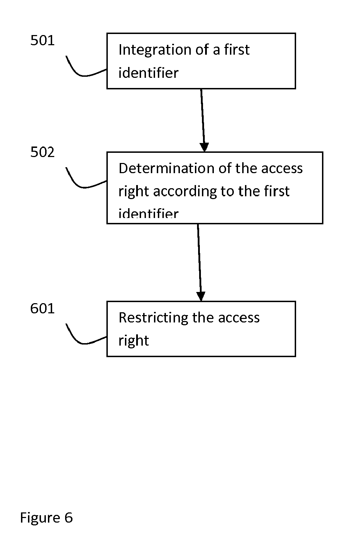

The figure 6 presents another embodiment of the system. In this embodiment the system also comprises a third module 601 configured to restrict the access right by concatenating, to the first identifier, by at least another number not belonging the first set of numbers, in order to obtain an updated first identifier.

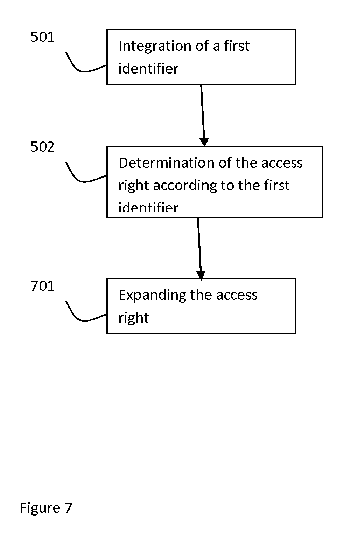

The figure 7 presents another embodiment of the system. In this embodiment the system also comprises a fourth module 701 configured to expand the access right by removing, to the first identifier, at least one of the numbers of the first set of numbers, in order to obtain an updated first identifier.

In another embodiment of the system, the system also comprises a third module 601 configured to restrict the access right by multiplying the first identifier by at least another prime number not belonging the first set of prime numbers, in order to obtain an updated first identifier.

In another embodiment of the system, the system also comprises a fourth module 701 configured to expand the access right by dividing the first identifier by at least one of the prime numbers of the first set of prime numbers, in order to obtain an updated first identifier.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method, described figure 1. This computer program is configured to manage the access rights associated to a dataflow transmitted within a system. The computer program comprises;
a step 101 of integrating a first identifier within the dataflow, this first identifier comprising an indication of the access right associated to the dataflow,
a step 102 of determining the access right, to the dataflow based on the first identifier integrated within the dataflow.

In an embodiment of the computer program the first identifier comprises;
a first set of different numbers, indicating the access rights, and
a first number non indicating the dataflow In this embodiment an element of the system is associated with a second identifier, this second identifier comprising:
a second set of different numbers, indicating the access rights, and
a second number indicating the dataflow.
In this embodiment the step 102 of determining the access right of this element is configured to determine if the second identifier comprises, within the second set of numbers all the numbers of the first set of numbers.
If the second identifier comprises, within the second set of numbers, all the number of the first set of numbers, the access right is granted to the element,
If the second identifier does not comprise, within the second set of numbers, all the number of the first set of numbers, the access right is denied to the element.

In an embodiment of the computer program the first identifier is the multiplication of:
a first set of different prime numbers, indicating the access rights, and
a first prime number non divisible by any of the numbers of the first set, indicating the dataflow.
In this embodiment of the computer program, an element of the system is associated with a second identifier constituted of the multiplication of
a second set of different prime numbers, indicating the access rights, and
a second number non divisible by any of the number of the second set, indicating the dataflow, and
eventually another integer number not dividing the second number nor any of the numbers of the second set used to obfuscate the second identifier,
In this embodiment the step 102 of determining the access right to this element is configured to determine if the second identifier is divisible by the first identifier.
Only if the second identifier is divisible by the first identifier the access right is granted to the element.

In an embodiment the integer number used to obfuscate the second identifier is a prime number.

In an embodiment of the computer program, this computer program comprises;
a step 201 of restricting the access right by concatenating, to the first identifier, by at least another number not belonging the first set of numbers, in order to obtain an updated first identifier and/or
a step 301 of expanding the access right by removing, to the first identifier, at least one of the numbers of the first set of numbers, in order to obtain an updated first identifier.

In an embodiment of the computer program, this computer program comprises;
a step 201 of restricting the access right by multiplying the first identifier by at least another prime number not belonging the first set of prime numbers, in order to obtain an updated first identifier and/or
a step 301 of expanding the access right by dividing the first identifier by at least one of the prime numbers of the first set of prime numbers, in order to obtain an updated first identifier.

## Claims

1. Method to manage the access rights associated to a dataflow transmitted within a system, the method comprising
a step (101) of integrating a first identifier within the dataflow, the first identifier comprising an indication of the access right associated to the dataflow,
a step (102) of determining the access right, to the dataflow, based on the first identifier integrated within the dataflow.

2. Method according to claim 1 wherein the first identifier comprised;
a first set of different numbers, indicating the access rights, and
a first number indicating the dataflow
wherein an element of the system is associated with a second identifier comprising:
a second set of different numbers, indicating the access rights, and
a second number indicating the dataflow, and
wherein the step (102) of determining the access right of this element is configured to determine if the second identifier comprises, within the second set of numbers, all the numbers of the first set of numbers .

3. Method according to claim 1 wherein the first identifier is the multiplication of a first set of different prime numbers, indicating the access rights, and
a first prime number non divisible by any of the numbers of the first set, indicating the dataflow
wherein an element of the system is associated with a second identifier constituted of the multiplication of:
a second set of different prime numbers, indicating the access rights, and
a second number non divisible by any of the previous prime number, indicating the dataflow,
and eventually another integer number not dividing the second number nor any of the numbers of the second set, used to obfuscate the second identifier,
wherein the step (102) of determining the access right of this element is configured to determine if the second identifier is divisible by the first identifier.

4. Method according to claim 2 also comprising;
a step (201) of restricting the access right by concatenating, to the first identifier, at least another number not belonging the first set of numbers, in order to obtain an updated first identifier and/or
a step (301) of expanding the access right by removing, to the first identifier, at least one of the numbers of the first set of numbers, in order to obtain an updated first identifier.

5. Method according to claim 3 also comprising;
a step (201) of restricting the access right by multiplying the first identifier by at least another prime number not belonging the first set of prime numbers, in order to obtain an updated first identifier and/or
a step (301) of expanding the access right by dividing the first identifier by at least one of the prime numbers of the first set of prime numbers, in order to obtain an updated first identifier.

6. System adapted to transmit and process a dataflow comprising;
a first module (501) configured to integrate first identifier within the dataflow, the first identifier comprising an indication of the access right associated to the dataflow,
a second module (502) configured to determine the access right to the dataflow based on the first identifier integrated within the dataflow.

7. System according to claim 6 wherein the first identifier comprised;
a first set of different numbers, indicating the access rights, and
a first number indicating the dataflow
wherein an element of the system is associated with a second identifier comprising:
a second set of different numbers, indicating the access rights, and
a second number indicating the dataflow, and
wherein the second module (502) is also configured to determine if the second identifier comprises, within the second set of numbers, all the numbers of the first set of numbers.

8. System according to claim 6 wherein the first identifier is the multiplication of a first set of different prime numbers, indicating the access rights, and
a first prime number non divisible by any of the numbers of the first set, indicating the dataflow
wherein an element of the system is associated with a second identifier constituted of the multiplication of:
a second set of different prime numbers, indicating the access rights, and
a second number non divisible by any of the numbers of the second set, indicating the dataflow,
and eventually another integer number not dividing the second number nor any of the numbers of the second set, used to obfuscate the second identifier,
wherein the second module (502) is also configured to determine if the second identifier is divisible by the first identifier.

9. System according to claim 7 also comprising;
a third module (601) configured to restrict the access right by concatenating, to the first identifier, by at least another number not belonging the first set of numbers, in order to obtain an updated first identifier and/or
a fourth module (701) configured to expand the access right by removing, to the first identifier, at least one of the numbers of the first set of numbers, in order to obtain an updated first identifier.

10. System according to claim 8 also comprising;
a third module (601) configured to restrict the access right by multiplying the first identifier by at least another prime number not belonging the first set of prime numbers, in order to obtain an updated first identifier and/or
a fourth module (701) configured to expand the access right by dividing the first identifier by at least one of the prime numbers of the first set of prime numbers, in order to obtain an updated first identifier.

11. A computer-readable medium having embedded thereon a computer program configured to manage the access rights associated to a dataflow transmitted within a system, the computer program comprising;
a step (101) of integrating a first identifier within the dataflow,
the first identifier comprising an indication of the access right associated to the dataflow,
a step (102) of determining the access right, to the dataflow based on the first identifier integrated within the dataflow.

12. Computer program according to claim 11 wherein the first identifier comprising;
a first set of different numbers, indicating the access rights, and
a first number non indicating the dataflow
wherein an element of the system is associated with a second identifier comprising:
a second set of different numbers, indicating the access rights, and
a second number indicating the dataflow, and
wherein the step (102) of determining the access right of this element is configured to determine if the second identifier comprised, within the second set of numbers all the numbers of the first set of numbers.

13. Computer program according to claim 11 wherein the first identifier is the multiplication of a first set of different prime numbers, indicating the access rights, and
a first prime number non divisible by any of the numbers of the first set, indicating the dataflow
wherein an element of the system is associated with a second identifier constituted of the multiplication of:
a second set of different prime numbers, indicating the access rights, and
a second number non divisible by any of the number of the second set, indicating the dataflow, and
a eventually another integer number not dividing the second number nor any of the numbers of the second set used to obfuscate the second identifier,
the step (102) of determining the access right to this element is configured to determine if the second identifier is divisible by the first identifier.

14. Computer program according to claim 12 also comprising;
a step (201) of restricting the access right by concatenating, to the first identifier, by at least another number not belonging the first set of numbers, in order to obtain an updated first identifier and/or
a step (301) of expanding the access right by removing, to the first identifier, at least one of the numbers of the first set of numbers, in order to obtain an updated first identifier.

15. Computer program according to claim 13 also comprising;
a step (201) of restricting the access right by multiplying the first identifier by at least another prime number not belonging the first set of prime numbers, in order to obtain an updated first identifier and/or
a step (301) of expanding the access right by dividing the first identifier by at least one of the prime numbers of the first set of prime numbers, in order to obtain an updated first identifier.
